# EUROPEAN PATENT APPLICATION

(11) **EP 1 667 474 A1**
(43) Date of publication of application: **07.06.2006**
(21) Application number: 04078295.5
(22) Date of filing: 03.12.2004
(51) Int. Cl.: H04Q 7/22

(54) **Method and processing unit for providing mobile service access to a mobile station**

(71) Applicant: Koninklijke KPN N.V., 2516 CK The Hague (NL)
(72) Inventor: Ergezinger, Siegfried, 40822 Mettmann (DE); Ekman, Hakan, 40468 Düsseldorf (DE)
(74) Representative: Wuyts, Koenraad Maria

(57) **Abstract**

Processing unit and method for enabling handset settings for independent mobile service access. The mobile communication network (1) is capable of communicating with a handset or mobile station (4). The mobile station (4) is provided with access to a set of mobile services supported by the mobile communication network (1) and the mobile station (4). The processing unit (2, 3) has processing means (3) arranged for adding access for the mobile station (4) to a further mobile service by identifying the settings of the mobile station (4) relating to the set of mobile services and the type of the mobile station (4) and sending code to the mobile station (4) for providing access to the further mobile service. The code may cause a change in the settings of the mobile station (4) or a re-routing of the mobile communication in the correct manner for the further mobile service.

## Description

### Field of the invention

The present invention relates to a method for providing mobile service access by a mobile communication network provider to a mobile station (or handset), the mobile station being provided with access to a set of mobile services supported by the provider and the mobile station. In a further aspect, the present invention relates to a processing unit for a mobile communication network. The processing unit may be implemented as a separate unit in the network, as a part of a base station of the network, or as part of any other network component. Examples of other network components comprise a radio network controller (RNC), a base station controller (BSC), a serving GPRS support node (SGSN), a gateway GPRS support node (GGSN), or a signal transfer point (STP)).

### Prior art

Mobile stations or handsets for present day mobile communication networks, such as GSM or UMTS, are able to provide a variety of functions next to the basic function of providing mobile speech connections. The exact implementation of each function may however be (slightly) different for different network providers. Usually the handsets are provided by a network provider to a customer with all settings correctly set on the handset. However, due to various reasons, settings for a specific function of the handset may be wrong, as a result of which a customer cannot use the associated function. Settings may be changed manually on the handset, but this requires extensive search and study of manuals, or the aid of a service desk.

### Summary of the invention

The present invention seeks to provide a method for providing access to services in a mobile network to a handset, which allows to use a service provided for in the network, even if the handset settings for that service are incorrect or absent.

According to the present invention, a method according to the preamble defined above is provided, in which the method comprises adding access to a further mobile service by identifying the settings of the mobile station relating to the set of mobile services and the type of the mobile station and sending code for providing access to the further mobile service. The type of mobile station may include e.g. the make, model, s/w version, etc. of the mobile station. The code may be sent to the mobile station and may comprise a file (executable), a list of parameters, commands, etc., depending on the type of settings required and the specific requirements of the mobile station. The code may alternatively include instructions which cause the mobile station (or the mobile network) to set up a re-routing in the mobile communication itself. The re-routing depends on an incorrect or missing parameter or setting in the mobile station, and the code for re-routing corrects for this. Providing access to the further mobile service may thus comprise providing the correct settings (or parameters) to the mobile station or setting up a re-routing in the mobile communication. The re-routing can be controlled by analyzing the different layers of information which are sent by the mobile station.

In an embodiment of the present method, sending code comprises sending code to the mobile station using an over-the-air mechanism. This provides for a simple and efficient adaptation of the mobile station in order to gain access to a specific mobile service.

Adding access to the further mobile service is executed after receiving a request from the mobile station to use the further mobile service. This provides for an efficient use of the present method, as a missing access to a specific service is only added when requested by the user of the mobile station. Alternatively, adding access to the further mobile service is executed after power-up of the mobile station. This has the advantage that each mobile handset associated with a network of a provider is kept up to date with regard to possible functions.

In order to actively involve the user of a mobile station and provide the user with control over the mobile station, in a further embodiment, the method further comprises sending a message to the mobile station comprising an acknowledge request for access to the further mobile service. The addition of access to the further mobile service is, in an even further embodiment, executed temporary or permanently, e.g. again using an acknowledge request to the mobile station.

In order to keep a user of a mobile station informed of the capabilities and functions of the mobile station, the method further comprises sending an information message, such as an SMS message, to the mobile station after adding access to the further mobile service.

In a further aspect, the present invention relates to a processing unit for a mobile communication network, the processing unit being capable of communicating with a mobile station associated with the mobile communication network, the mobile station being provided with access to a set of mobile services supported by the mobile communication network and the mobile station, the processing unit comprising processing means arranged for adding access for the mobile station to a further mobile service by identifying the settings of the mobile station relating to the set of mobile services and the type of the mobile station and sending code for providing access to the further mobile service. Further embodiments of the processing unit are described in the further dependent claims, relating to features analogue to the method features as described above.

In an even further aspect, the present invention relates to a computer program product comprising computer executable instructions, which, when loaded on a processing unit connected to a mobile communication network, provides the processing unit with the functionality of the method according to the present invention. The computer executable instructions may be loaded on a subsystem of a mobile communication network, such as a base station or any other network component (e.g. RNC, BSC, SGSN, GGSN, STP), in order to provide the mobile communication network with the functionality of the present invention.

### Short description of drawings

The present invention will be discussed in more detail below, using a number of exemplary embodiments, with reference to the attached drawings, in which
Fig. 1 shows a schematic diagram of a part of a mobile communication system in which the present invention is used;
Fig. 2 shows a flow diagram of an embodiment of the method according to the present invention; and
Fig. 3 shows a flow diagram of a further part of an embodiment of the method according to the present invention.

### Detailed description of exemplary embodiments

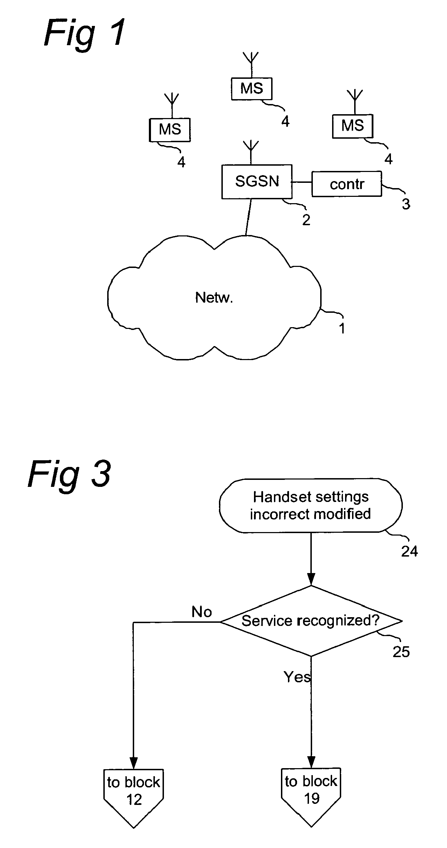

An exemplary, simplified diagram of a mobile communication network system in which the present invention of enabling handset settings for independent mobile service access may be applied, is shown in Fig. 1. A serving GPRS support node (SGSN) 2 is connected to a communication network 1. The SGSN 2 is a node in a GPRS infrastructure that is responsible for the delivery of data packets from and to the mobile stations within its service area, as is known to the person skilled in the art. The SGSN 2 allows communication links to be provided with a number of mobile stations 4 (or handsets). The SGSN 2 is connected to a controller unit 3, which is configured to execute the method of the present invention, as explained below. The controller unit 3 may be a computer or processing system, and may be provided as a stand alone unit interfaced with the SGSN 2. Alternatively, the controller unit 3 is part of the SGSN 2, or is part of another element of the mobile communication network system which is able to interface with the SGSN 2.

The handset 4 is provided with electronic circuitry to provide the functions to the handset 4, such as telephony functions, WAP-functions, etc. The electronic circuitry also comprises non-volatile memory, in which various settings of the handset 4 are stored.

It is foreseeable that customers of mobile operators will increasingly use handsets 4 which are not provisioned correctly for services provided by the corresponding mobile operator. This leads to the situation that the customer cannot use the selected service at the first go. Assuming that the customer has not the knowledge of configuring the handset 4 and is not able to configure the handset 4 himself by getting support of the customer care (hotline or electronic customer care), the customer will not use the service and therefore potential revenue for the mobile network operator is lost. Furthermore, the mobile operator experiences additional costs caused by the multiple contacts of the customer to the customer service.

The customer can purchase a handset 4 that is provisioned incorrectly for the corresponding mobile operator via different sources:
- the customer purchases a handset 4 at an internet auction (e.g. ebay) or at a domestic or foreign supplier
- the customer purchases a handset 4 at a discounter (e.g. Aldi or Tchibo)
- the customer changes the mobile operator but still uses the old handset 4 (e.g. Mobile Number Portability or a large company with many contracts changed the default mobile operator)
- a mobile operator purchases its handsets 4 via a central sales channel where a pre-provisioning of the handsets 4 is not done due to various reasons (e.g. costs) Finally, a customer might change (intentionally or by accident) the correct handset 4 settings.

According to an embodiment of the present method, the customer can access the (possibly) requested service of his mobile operator without any configuration effort by the customer. In case that a customer confirmation for the actions initiated by the network is legally required an user-friendly query is done during the process. The required modifications are initiated proactive, e.g. at switch-on of the handset 4, or reactive, e.g. at first time the service is requested, by the mobile operator.

In the context of this description, a number of services may be provided by mobile operators, which require correct settings of the user's handset 4. From today's point of view the following services of a mobile operator are considered:
- Portal Services like standard Wireless Access Protocol (WAP) access of domestic or foreign mobile operators as well as domestic or foreign mobile operator specific portal-solutions like i-mode, T-Zone and Vodafone Live
- Standard Multimedia Messaging (MMS) Access
- Standard Short Message Service (SMS) Access
- Standard Internet-Access via Circuit Switched Data (CSD) or General Packet Radio
   Service (GPRS) / Universal Mobile Telecommunication System for Packet
   Switched (UMTS-PS)
- Streaming-Services (Audio and/or Video)
- Services based on 3GPP IP Multimedia Subsystem (IMS), e.g. SIP-Applications like Push to Talk over Cellular (PoC), Presence Services, Video and/or Text
   Messaging, Chat and
   Voice over IP (VoIP)
- Mobile operator specific customer care numbers (e.g. hotline, directory assistance, etc ...)

According to the present invention, three possible cases exist:
1. The customer switches-on the handset 4 for the first time and does not request any specific service
2. The customer requests a specific service
3. The customer changes (intentionally or by accident) the correct handset 4 settings

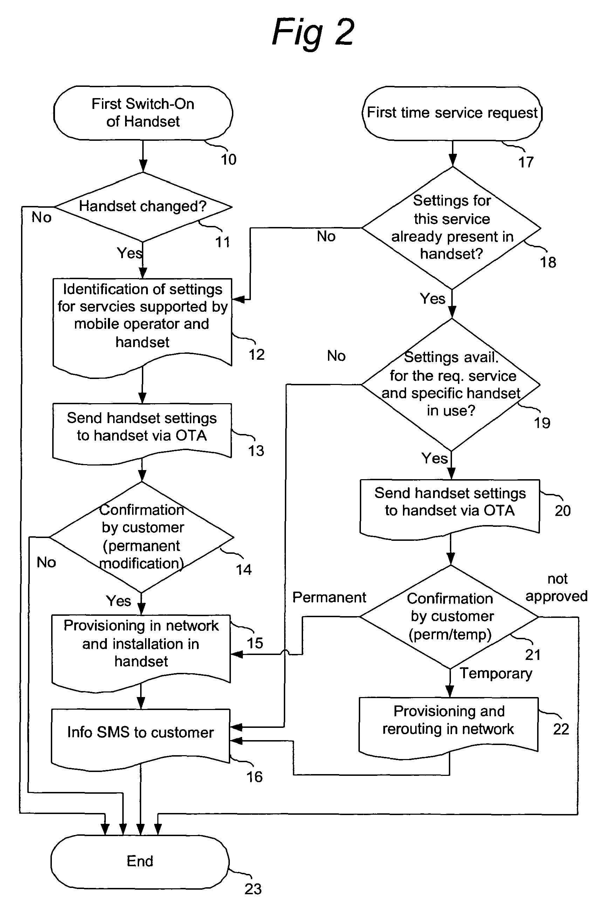

In Fig. 2 and 3, flow charts are given for the various cases identified. The customer switches-on the handset for the first time (block 10) and does not request a specific service. The network recognizes the change of the handset 4 (decision block 11) and identifies the handset settings for all services available at the mobile operator and supported by the specific handset 4 in use (block 12). Thereafter, the handset settings are sent via the Over The Air (OTA) mechanism (block 13) to the customers handset 4 which need to be confirmed on a one by one basis (decision block 14). In case the customer does not approve the settings the procedure is aborted (end block 23) and next time the handset is switched-on the scenario 1 is not evaluated again.

In case the customer approves the handset settings these settings a stored permanently on the handset 4 and the provisioning of the service in the network 1 is initiated (block 15). After successful provisioning of the customer an Info-SMS is send to the customers handset 4 (block 16), after which the flow proceeds to end block 23.

In the second scenario, the customer requests a specific service using his handset 4 (block 17). It is checked if the requested service can be identified (decision block 18) and if the handset settings are available for the requested service and the specific handset 4 used (block 19).

In case that there are no handset settings in the handset 4 present ('no' branch of decision block 18) all services available at the mobile operator and supported by the specific handset in use are identified by the network (block 12 again). Thereafter, the handset settings are sent via the Over The Air (OTA) mechanism to the customers handset 4 (block 13) which need to be confirmed on an one by one basis (decision block 14). In case the customer does not approve the settings the procedure is aborted (end block 23) and next time the handset is switched-on the second scenario is not evaluated again.

In case the customer approves the handset settings ('yes' branch in decision block 14) these settings are stored permanently on the handset 4 and the provisioning of the service in the network is initiated (block 15). After successful provisioning of the customer an Info-SMS is send to the customers handset 4 (block 16), after which the flow stops in end block 23.

In case the requested service can be identified and handset settings are available for the requested service ('yes' branch in decision block 19) the handset settings for this specific service are sent via the Over The Air (OTA) mechanism to the customers handset (block 20) which need to be confirmed. In case the customer does not approve the settings ('not approved' branch in decision block 21) the procedure is aborted (end block 23).

In case the customer approves the handset settings as permanent ('permanent' branch in decision block 21) these settings are stored permanently on the handset and the provisioning of the service in the network is initiated (block 15). After successful provisioning of the customer an Info-SMS is send to the customers handset 4 (block 16), after which the flow stops in end block 23.

In case the customer approves the handset settings as temporary ('temporary' branch in decision block 21) these settings are stored temporarily on the handset 4 and the provisioning of the service in the network is initiated (block 22). After successful provisioning of the customer an Info-SMS is send to the customers handset 4 (block 16), after which the flow stops (end block 23).

In Figure 3, the additional flow chart is given for a third scenario. Here, the customer changed (intentionally or by accident) the correct handset settings (block 24). In case the requested service can be identified ('yes' branch in decision block 25) and handset settings are available for the requested service ('yes' branch in decision block 19, see Figure 2) the handset settings for this specific service are sent via the Over The Air (OTA) mechanism to the customers handset (block 20) which need to be confirmed. In case the customer does not approve the settings ('not approved' branch in decision block 21) the procedure is aborted (end block 23). In case the customer approves the handset settings as permanent ('permanent' branch in decision block 21) these settings a stored permanently on the handset and the provisioning of the service in the network is initiated (block 15). After successful provisioning of the customer an Info-SMS is send to the customers handset 4 (block 16), after which the flow stops in end block 23.

As an alternative to sending handset setting to the handset 4, in case of incorrect or missing parameters, code may be issued in the mobile network 1 which cause a re-routing of the mobile communication in the correct manner for the further mobile service.

In case the customer approves the handset settings as temporary ('temporary' branch in decision block 21) these settings are stored temporarily on the handset 4 and the provisioning of the service in the network is initiated (block 22). After successful provisioning of the customer an Info-SMS is send to the customers handset (block 16), after which the flow stops (end block 23).

In case the requested service can not be identified ('no' branch in decision block 25), all services available at the mobile operator and supported by the specific handset in use are identified by the network (block 12, Figure 2). Thereafter, the handset settings are sent via the Over The Air (OTA) mechanism to the customers handset 4 (block 13) which need to be confirmed on a one by one basis. In case the customer does not approve the settings ('no' branch in decision block 14) the procedure is aborted (end block 23) and next time the handset 4 is switched-on the scenario 1 is not evaluated again. In case the customer approves the handset settings ('yes' branch in decision block 14) these settings a stored permanently on the handset 4 and the provisioning of the service in the network is initiated (block 15). After successful provisioning of the customer an Info-SMS is send to the customers handset 4 (block 16, after which the flow stops (end block 23).

A computer program product, such as a computer program on a storage medium such as a magnetic or optic disc, may be provided with computer executable instructions. These instructions, when loaded on a properly equipped unit in the mobile network 1 such as the controller unit 3, provide the unit with the functionality as described above with reference to the different embodiments of the present invention. In this manner, any mobile communication network 1 may be provided with the functionality of the present invention, providing a customer handset 4 with access to all available services in the respective network 1.

## Claims

1. Method for providing mobile service access by a mobile communication network provider to a mobile station (4), the mobile station (4) being provided with access to a set of mobile services supported by the provider and the mobile station (4), the method comprising adding access to a further mobile service by:
- identifying the settings of the mobile station (4) relating to the set of mobile services and the type of the mobile station (4);
- sending code for providing access to the further mobile service.

2. Method according to claim 1, in which sending code comprises sending code to the mobile station (4) using an over-the-air mechanism.

3. Method according to claim 1 or 2, in which adding access to the further mobile service is executed after receiving a request from the mobile station (4) to use the further mobile service.

4. Method according to claim 1 or 2, in which adding access to the further mobile service is executed after power-up of the mobile station (4).

5. Method according to any one of the proceeding claims, further comprising sending a message to the mobile station (4) comprising an acknowledge request for access to the further mobile service.

6. Method according to any one of the proceeding claims, in which adding access to the further mobile service is executed temporary or permanently.

7. Method according to any one of the proceeding claims, further comprising sending an information message to the mobile station (4) after adding access to the further mobile service.

8. Processing unit for a mobile communication network, the processing unit (2, 3) being capable of communicating with a mobile station (4) associated with the mobile communication network (1), the mobile station (4) being provided with access to a set of mobile services supported by the mobile communication network (1) and the mobile station (4), the processing unit (2, 3) comprising processing means (3) arranged for adding access for the mobile station (4) to a further mobile service by:
- identifying the settings of the mobile station (4) relating to the set of mobile services and the type of the mobile station (4);
- sending code for providing access to the further mobile service.

9. Processing unit according to claim 8, in which the processing unit (2, 3) is further arranged for sending code to the mobile station (4) using an over-the-air mechanism.

10. Processing unit according to claim 8 or 9, in which the processing unit (2, 3) is arranged for adding access to the further mobile service after receiving a request from the mobile station (4) to use the further mobile service.

11. Processing unit according to claim 8 or 9, in which the processing unit (2, 3) is arranged for adding access to the further mobile service after receiving a signal relating to power-up of the mobile station (4).

12. Processing unit according to any one of claims 8 to 11, in which the processing unit (2, 3) is further arranged for sending a message to the mobile station (4) comprising an acknowledge request for access to the further mobile service.

13. Processing unit according to any one of claims 8 to 12, in which the processing unit (2, 3) is arranged for adding access to the further mobile service temporary or permanently.

14. Processing unit according to any one of claims 8 to 13, in which the processing unit (2, 3) is arranged for sending an information message to the mobile station (4) after adding access to the further mobile service.

15. Computer program product comprising computer executable instructions, which, when loaded on a processing unit (2, 3) connected to a mobile communication network (1), provides the processing unit (2, 3) with the functionality of the method according to any one of claims 1 to 7.
